(19) Europäisches Patentamt
European Patent Office
Office européen des brevets

(11) EP 0 864 599 B1

(12) **EUROPÄISCHE PATENTSCHRIFT**

(45) Veröffentlichungstag und Bekanntmachung des Hinweises auf die Patenterteilung:
**30.07.2003 Patentblatt 2003/31**

(51) Int Cl.$^7$: **C08G 77/448**, C08G 64/18

(21) Anmeldenummer: **98103319.4**

(22) Anmeldetag: **26.02.1998**

(54) **Verfahren zur Herstellung von Polysiloxan-Polycarbonat-Blockcokondensaten**

Process for preparing polysiloxane-polycarbonate block cocondendates

Procédé de préparation des copolycondensats polysiloxane-polycarbonate

(84) Benannte Vertragsstaaten:
**BE DE ES FR GB IT NL**

(30) Priorität: **12.03.1997 DE 19710081**

(43) Veröffentlichungstag der Anmeldung:
**16.09.1998 Patentblatt 1998/38**

(73) Patentinhaber: **BAYER AG**
**51368 Leverkusen (DE)**

(72) Erfinder:
- **König, Annett, Dr.**
  **47800 Krefeld (DE)**
- **Ebert, Wolfgang, Dr.**
  **47800 Krefeld (DE)**
- **Köhler, Walter**
  **47239 Duisburg (DE)**

(56) Entgegenhaltungen:
**EP-A- 0 595 141** **DE-A- 19 539 290**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 864 599 B1

Printed by Jouve, 75001 PARIS (FR)

## Beschreibung

Gegenstand der vorliegenden Erfindung ist ein Verfahren zur Herstellung von Polysiloxan-Polycarbonat-Blockcokondensaten aus phenolischen Verbindungen und Diarylcarbonaten in der Schmelze bei Temperaturen von 250°C bis 320°C, vorzugsweise von 280°C bis 300°C und Drücken von 0,01 mbar bis 100 mbar, gegebenenfalls in Gegenwart eines Katalysators, das dadurch gekennzeichnet ist, daß man als phenolische Verbindungen Hydroxyaryloxy-terminierte Dimethylsiloxane und anstelle von Diarylcarbonaten Oligocarbonate aus Diphenolen mit mittleren Molekulargewichten $\overline{M}w$ (Gewichtsmittel, ermitelt durch Messung der relativen Lösungsviskosität in $CH_2Cl_2$ in bekannter Weise, wobei Eichung durch die Lichtstreuungsmethode erfolgt) von 3.000 bis 24.000, vorzugsweise von 5.000 bis 15.000 und mit OH/Aryl-Endgruppenverhältnissen von 10 zu 90 bis 70 zu 30, vorzugsweise von 20 zu 80 bis 60 zu 40 einsetzt, wobei das Gewichtsverhältnis zwischen den Hydroxyaryloxy-terminierten Dimethylsiloxanen zu den Oligocarbonaten zwischen 1 zu 99 und 40 zu 60, vorzugsweise zwischen 3 zu 97 und 30 zu 70 liegt.

Die erfindungsgemäß einzusetzenden Oligocarbonate können als solche eingesetzt werden oder in situ vor der erfindungsgemäßen Reaktion gebildet werden.

Die nach dem erfindungsgemäßen Verfahren erhältlichen Polysiloxan-Polycarbonat-Blockcokondensate haben insbesondere eine verbesserte Tieftemperaturschlagzähigkeit, ein verbessertes ESC-Verhalten (Environmental Stress Cracking) und eine verbesserte Fließfähigkeit.

Gegenstand der vorliegenden Erfindung sind somit außerdem die nach dem erfindungsgemäßen Verfahren erhältlichen Polysiloxan-Polycarbonat-Blockcokondensate.

Die Darstellung von Polysiloxancarbonat-Blockcopolymeren über das Phasengrenzflächenverfahren ist literaturbekannt und beispielsweise in US-PS 3 189 662, US-PS 3 419 634, DE-OS 3 34 782 (LeA 22 594) und EP 0 122 535 (LeA 22 594-EP) beschrieben.

Die Darstellung von Polysiloxancarbonat-Blockcopolymeren nach dem Schmelzumesterungsverfahren aus Bisphenol, Diarylcarbonat, silanolendterminierten Polysiloxanen und Katalysator, ist in der US 5 227 449 beschrieben. Als Siloxanverbindungen werden dabei Polydiphenyl- bzw. Polydimethylsiloxan-Telomere mit Silanolendgruppen verwendet. Bekannt ist jedoch, daß derartige Dimethylsiloxane mit Silanolendgruppen im sauren oder basischen Medium mit abnehmender Kettenlänge, im Gegensatz zu Diphenylsiloxan mit Silanolendgruppen, zunehmend zur Selbstkondensation neigen, so daß ein Einbau in das entstehende Copolymer dadurch erschwert ist. Dabei gebildete cyclische Siloxane verbleiben im Polymer und wirken außerordentlich störend bei Anwendungen im Elektrik-/Elektronikbereich.

In der US 5 504 177 wird die Herstellung eines Blockcopolysiloxancarbonats über die Schmelzumesterung aus einem carbonatterminierten Silicon mit Bisphenol und Diarylcarbonat beschrieben. Aufgrund der großen Unverträglichkeit der Siloxane mit Bisphenol und Diarylcarbonat ist ein gleichmäßiger Einbau der Siloxane in die Polycarbonat-Matrix über dem Schmelzumesterungsprozeß nicht zu erreichen, so daß diese Produkte Delaminierungen zeigen. Nachteilig ist außerdem die aufwendige Darstellung der Siloxanblöcke über einen Zweistufen-Prozeß.

In der US 4 920 183 wird die Darstellung von Siloxan-Poly-(arylcarbonat)-Blockcopolymeren beschrieben, indem ein hydroxyterminiertes Poly-(arylcarbonat)-Oligomer mit einem chlorterminierten Polydiorganosiloxan in einem organischen Lösungsmittel in Gegenwart eines Säurefängers umgesetzt wird.

In der US 5 344 908 wird die Darstellung eines Silicon-Polycarbonat-Blockcopolymers über einen Zweistufen Prozeß beschrieben, bei dem ein über ein Schmelzumesterungsprozeß hergestelltes OH-terminiertes BPA-Oligocarbonat mit einem chlorterminierten Polyorganosiloxan in Gegenwart eines organischen Lösungsmittels und eines Säurefängers umgesetzt wird.

Nachteilig bei den letzten beiden Verfahren ist die Verwendung von organischen Lösungsmitteln in mindestens einem Schritt der Synthese der Silicon-Polycarbonat-Blockcopolymeren.

Die Aufgabe bestand daher darin, ein Verfahren zu finden, das Polysiloxanpolycarbonat-Blockcopolymere über einen Schmelzumesterungsverfahren zugänglich macht, d.h. ohne Verwendung von organischen Lösungsmitteln, wobei wegen der mechanischen Eigenschaften die Siloxanblöcke weitgehend gleichmäßig in der PC-Matrix verteilt sein sollten.

In der älteren deutschen Patentanmeldung P 195 39 290.6 (LeA 31 263) vom 23.10.1995 wird auch ein Verfahren zur Herstellung von Poly-(diorganosiloxan)-Polycarbonat-Blockcopolymeren in der Schmelze aus Si-freien Diphenolen, Kohlensäurediarylestern und Polydiorganosiloxanen beschrieben, wobei spezielle Katalysatoren verwendet werden müssen.

Auf Seite 9, Zeilen 12/13 dieser Patentanmeldung wird erwähnt, daß anstelle der Si-freien Diphenole auch OH-Gruppen-haltige Oligocarbonate dieser Diphenole umgesetzt werden können.

Nähere Einzelheiten über die Oligocarbonate sind in dieser älteren Patentanmeldung nicht ausgeführt.

Hydroxyaryloxy-terminierte Dimethylsiloxane sind vorzugsweise solche der Formel (I)

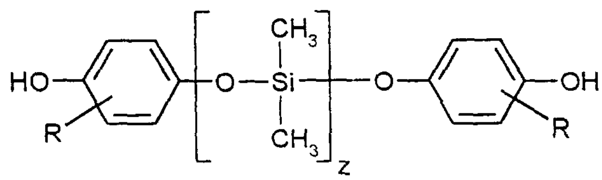

(I),

worin

R H, Cl, Br, $C_1$-$C_4$-Alkyl, vorzugsweise H oder $CH_3$ ist,

z eine Zahl von 5 bis 150, vorzugsweise von 7 bis 80 und insbesondere von 10 bis 60 ist.

Die Herstellung der Dimethylsiloxane (I) ist beispielsweise in der DE 3 334 782 A1 beschrieben.
Entsprechend erfolgt die Herstellung von anderen, erfindungsgemäß einzusetzenden Hydroxyaryloxy-terminierten Dimethylsiloxanen.
Besonders wichtig ist, daß die Dimethylsiloxane (I) in möglichst reiner Form eingesetzt werden, d.h. frei von Alkaliverbindungen und Erdalkaliverbindungen sind.
Oligocarbonate aus Diphenolen sind vorzugsweise solche der Formel

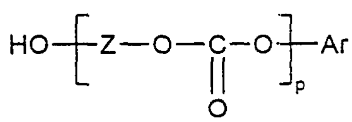

(II),

worin

Z ein Arylenrest mit 6 bis 30 C-Atomen ist, der einkernig oder mehrkernig sein kann, noch Heteroatome enthalten kann und durch Halogen beispielsweise Cl, Br, oder durch $C_1$-$C_3$-Alkylreste substituiert sein kann,

Ar ein $C_6$-$C_{14}$-Arylrest, vorzugsweise Phenyl, Halogenphenyl oder Alkylphenyl ist, worin

p eine Zahl von 5 bis 300, vorzugsweise 10 bis 150 ist und worin das Molverhältnis von OH zu Ar zwischen 10 zu 90 und 70 zu 30 liegt.

Die Herstellung der Oligocarbonate (II) erfolgt beispielsweise aus den Diphenolen (III)

$$HO\text{-}Z\text{-}OH \qquad (III)$$

mit Diarylcarbonaten (IV)

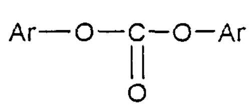

(IV)

in bekannter Weise gemäß der DE-OS 42 38 123 (LeA 29 275), beziehungsweise dem entsprechenden BE-PS 09 30 1216 bzw. dem entsprechenden US-PS 5 340 905.
Die Herstellung der Oligocarbonate (II) erfolgt somit beispielsweise, indem man die Diphenole (III) mit den Diarylcarbonaten (IV) bei Temperaturen zwischen 100°C und 290°C, vorzugsweise zwischen 150°C und 280°C in Anwesenheit von Katalysatoren umestert, wobei die entstehenden Monophenole durch Anlegen von Vakuum zwischen

1 bar und 0,5 mbar, bevorzugt zwischen 500 mbar und 1 mbar entfernt werden.

Die Isolierung der resultierenden Oligocarbonate erfolgt in bekannter Weise.

Entsprechend erfolgt die Herstellung von anderen, erfindungsgemäß einzusetzenden aromatischen Oligocarbonaten.

Geeignete Diphenole (III), worin Z die für (II) genannte Bedeutung hat, sind Hydrochinon, Resorcin, Bis-(hydroxyphenyl)-alkane, Bis-(hydroxyphenyl)-cycloalkane, Bis-(hydroxyphenyl)-sulfide, -ether, -sulfoxide, -sulfone und α, α-Bis-(hydroxyphenyl)-diisopropylbenzole, sowie deren kernalkylierte und kernhalogenierte Verbindungen.

Bevorzugte Diphenole (III) sind:

4,4'-Dihydroxydiphenyl,
2,2-Bis-(hydroxyphenyl)-propan,
2,4-Bis-(hydroxyphenyl)-2-methylbutan,
1,1-Bis-(hydroxyphenyl)-cyclohexan,
α,α-Bis-(hydroxyphenyl)-p-diisopropylbenzol,
α,α-Bis-(hydroxyphenyl)-m-diisopropylbenzol,
2,2-Bis-(3-methyl-4-hydroxyphenyl)-propan,
2,2-Bis-(3-chlor-4-hydroxyphenyl)-propan,
Bis-(3, 5-dimethyl-4-hydroxyphenyl)-methan,
2,2-Bis-(3, 5-dimethyl-4-hydroxyphenyl)-propan,
Bis-(3, 5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α-Bis-(3,5-dimethyl-4-hydroxyphenyl)-p-diisopropylbenzol,
1,1-Bis-(4-hydroxyphenyl)-3,3,5-trimethylcyclohexan,
1,1-Bis-(4-hydroxyphenyl)-3 -methylcyclohexan,
1,1-Bis-(4-hydroxyphenyl)-3,3-dimethylcyclohexan,
1,1-Bis-(4-hydroxyphenyl)-4-methylcyclohexan,
2,2-Bis-(3, 5-dichlor-4-hydroxyphenyl)-propan,
2,2-Bis-(3,5-dibrom-4-hydroxyphenyl)-propan,
1,1-Bis-(4-hydroxyphenyl)-1-phenyl-ethan,
2,2-Bis-(3,5-dimethyl-4-hydroxyphenyl)-2-phenyl-ethan,
2,2-Bis-(4-hydroxyphenyl)-2,2-diphenyl-ethan,
9,9-Bis-(4-hydroxyphenyl)-fluoren.

Besonders bevorzugte Diphenole (III) sind z.B.:

2,2-Bis-(4-hydroxyphenyl)-propan,
2, 2-Bis-(3, 5-dimethyl-4-hydroxyphenyl)-Propan,
1,1-Bis-(4-hydroxyphenyl)-cyclohexan,
1,1-Bis-(4-hydroxyphenyl)-1-phenyl-ethan,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-4-methylcyclohexan,
9,9-Bis-(3,5-dimethyl-4-hydroxyphenyl)-fluoren.

Insbesondere sind 2,2-Bis-(4-hydroxyphenyl)-propan, 1,1-Bis-(4-hydroxyphenyl)-3,3,5-trimethylcyclohexan und 1,1-Bis-(4-hydroxyphenyl)-1-phenyl-ethan bevorzugt.

Für die Herstellung der erfindungsgemäß einsetzbaren Oligocarbonate können sowohl einzelne Diphenole als auch Gemische von Diphenolen eingesetzt werden.

Diphenole, insbesondere die der Formel (III) sind literaturbekannt oder nach literaturbekannten Verfahren herstellbar. (Siehe beispielsweise US-PS 3 028 365 und die Monographie "H. Schnell, Chemistry and Physics of Polycarbonates, Interscience Publishers, New York, 1964")

Geeignete Diarylcarbonate (IV), worin Ar die für (II) genannte Bedeutung hat, sind Di-$C_6$-$C_{14}$-Arylcarbonate, vorzugsweise die Diester von Phenol, halogensubstituierten Phenolen oder alkylsubstituierten Phenolen, also Diphenylcarbonat oder Dikresylcarbonat.

Die Diarylcarbonate (IV) sind literaturbekannt oder nach literaturbekannten Verfahren herstellbar.

Weitere Einzelheiten für die Herstellung der erfindungsgemäß einzusetzenden aromatischen Oligocarbonate sind dem Fachmann geläufig. So werden pro Mol Diphenol 1 bis 30 mol-%, vorzugsweise 2 bis 15 mol-% Überschuß

an Diarylcarbonat eingesetzt. Es versteht sich für den Fachmann auch, daß die Diphenole und Diarylcarbonate möglichst rein eingesetzt werden, insbesondere sollen sie einen Gehalt an Alkali- und Erdalkalimetallionen von weniger als 0,1 ppm haben, um störende Nebenreaktionen bei der Oligocarbonatherstellung zu vermeiden.

Bevorzugte Katalysatoren für die Herstellung der erfindungsgemäß einzusetzenden Oligocarbonate sind Ammonium- und Phosphoniumkatalysatoren, wie beispielsweise

Tetramethylammoniumhydroxid,
Tetramethylammoniumacetat,
Tetramethylammoniumfluorid,
Tetramethylammoniumtetraphenylboranat,
Tetraphenylphosphoniumfluorid,
Tetraphenylphosphoniumtetraphenylboranat,
Tetraphenylphosphoniumphenolat,
Dimethyldiphenylammoniumhydroxid,
Tetraethylammoniumhydroxid,
Cethyltrimethylammoniumtetraphenylboranat und
Cethyltrimethylammoniumphenolat.

Sie werden in den bekannten Mengen von $10^{-8}$ mol bis $10^{-4}$ mol, vorzugsweise $10^{-7}$ mol bis $10^{-5}$ mol, pro Mol Diphenol eingesetzt.

Sie können allein oder im Gemisch eingesetzt werden und in Substanz oder als Lösung, beispielsweise in Wasser oder in Phenol, zugesetzt werden.

Für das erfindungsgemäße Verfahren geeignete Katalysatoren sind die vorstehend für die Oligocarbonatherstellung genannten, die entweder via Oligocarbonate in die Reaktion eingeführt werden oder noch zusätzlich hinzugefügt werden.

Die Katalysatoren können allein oder im Gemisch eingesetzt werden und in Substanz oder als Lösung, beispielsweise in Wasser oder in Phenol, zugesetzt werden.

Das erfindungsgemäße Verfahren kann kontinuierlich oder diskontinuierlich beispielsweise in Rührkesseln, Dünnschichtverdampfern, Rührkesselkaskaden, Extrudern, Knetern, einfachen Scheibenreaktoren und Hochviskosescheibenreaktoren durchgeführt werden.

Die nach dem erfindungsgemäßen Verfahren erhältlichen Polysiloxan-Polycarbonat-Blockcokondensate haben mittlere Gewichtsmolmassen Mw von 18.000 bis 60.000, vorzugsweise 19.000 bis 40.000 haben, ermittelt durch Messung der relativen Lösungsviskosität in Dichlormethan oder in Mischungen gleicher Gewichtsmengen Phenol/o-Dichlorbenzol geeicht durch Lichtstreuung. Dies wird dadurch erreicht, daß bevorzugt niedrigmolekulare Oligocarbonate durch Monophenoldestillation zu niedrigviskoseren Polycarbonaten und höhermolekulare Oligocarbonate zu höherviskosen Polycarbonaten polykondensiert werden.

Den nach dem erfindungsgemäßen Verfahren erhältlichen Polysiloxan-Polycarbonat-Blockcokondensaten können Füll- und Verstärkungsstoffe in Mengen bis zu 6 Gew.-% zugemischt werden. Außerdem können die für thermoplastische Polycarbonate geeigneten Stabilisatoren (beispielsweise UV-, Thermo- und Gammastrahlenstabilisatoren), Antistatika, Fließhilfsmittel, Entformungsmittel und Flammschutzmittel zugesetzt. Beispiele sind Alkylphosphite, Arylphosphite, Arylphosphate, Arylphosphone, niedermolekulare Carbonsäureester, Halogenverbindungen, Kreide, Quarzmehl, Glasfasern und Kohlenstofffasern.

Weiterhin können den erfindungsgemäß erhältlichen Blockcokondensaten auch andere Polymere zugemischt werden, wie beispielsweise Polyolefine, Polyurethane oder Polystyrole.

Der Zusatz dieser Stoffe, sowohl der niedermolekularen als auch der hochmolekularen, erfolgt vorzugsweise auf herkömmlichen Aggregaten zum fertigen Blockcokondensat.

Die nach dem erfindungsgemäßen Verfahren erhältlichen Blockcokondensate können in für thermoplastische Polycarbonate bekannter Weise zu beliebigen Formkörpern verarbeitet werden.

Die nach dem erfindungsgemäßen Verfahren erhältlichen Polysiloxan-Polycarbonat-Blockcokondensate sind überall dort verwendbar, wo die bekannten aromatischen Polycarbonate bislang Verwendung finden und wo zusätzlich gute Fließfähigkeit gepaart mit verbesserten Entformungsverhalten und hoher Zähigkeit bei niedrigen Temperaturen und verbesserter Chemikalienresistenz erforderlich sind, wie z.B. zur Herstellung großer Kraftfahrzeug-Außenteile und Schaltkästen für den Außeneinsatz, von Platten, Hohlkammerplatten, von Teilen für Elektrik und Elektronik sowie von optischen Speichern.

**Beispiele**

I) Herstellung der Verbindungen der Formel (I)

I/1) Allgemeine Herstellungsvorschrift

Ansatzgröße:

10 mol Octamethylcyclotetrasiloxan ($D_4$-Ring)

X g Hydrochinon

$$X = \frac{110 g/mol * 10 mol * 2}{z}$$

Y g Schwefelsäure

$$Y = (741,5 + X) * 0,1 \%$$

W g Perfluorbutansulfonsäure

$$W = (741,5 + X) * 0,05\%$$

V g Wasser

$$V = \frac{9 g/mol * 10 mol * 2}{z}$$

U g Ammoniumcarbonat

$$U = \frac{W + Y}{49 g/mol} * 96,1 g/mol$$

300 g Xylol oder Destillat aus vorigem Versuch

Durchfühung

In einen Rührapparat mit Heizung, Rührer, Thermometer, Wasserabscheider, Rückflußkühler werden unter Stickstoff Octamethylcyclotetrasiloxan, Hydrochinon, Xylol und die Säuren vorgelegt, bis zum Rückfluß erhitzt und solange gerührt, bis die entsprechende Wassermenge abgeschieden ist. Anschließend wird auf <60°C abgekühlt, Ammoniumcarbonat zugegeben und 1/2 h nachgerührt. Es wird eine Probe genommen, filtriert und der Säuregehalt bestimmt. Ist der Säuregehalt >10 ppm HCl, wird nochmals Ammoniumcarbonat nachgegeben und eine weitere 1/2 h nachgerührt.

Ist der Säuregehalt <10 ppm HCl, wird in einer Ausheizapparatur 1 h bei 150°C unter Ölpumpenvakuum ausgeheizt, abgekühlt, mit $N_2$ belüftet und über Seitz-Filter K 300 filtriert. Die Ausbeute beträgt ohne Destillatrückführung ca. 65 % und mit Destillatrückführung ca. 75 % der Theorie*

Nach dieser Vorschrift wurden die in der Tabelle aufgeführten Polydimethylsiloxane erhalten.

Tabelle 1

| Aufbau der Polydimethylsiloxane mit Hydrochinon-Endgruppen | |
|---|---|
| Probe Nr. | Blocklänge z |
| A | 42,6 |
| B | 28 |

Die Ausbeuten werden bei der technischen Herstellung durch geringere Filtrationsverluste ca. 10 bis 15 % höher liegen.

Tabelle 1 (fortgesetzt)

| Aufbau der Polydimethylsiloxane mit Hydrochinon-Endgruppen | |
|---|---|
| Probe Nr. | Blocklänge z |
| C | 10 |
| D | 35,5 |
| E | 24,8 |
| F | 29,6 |
| G | 27,1 |
| H | 17,9 |

II) Herstellung eines Oligocarbonats der Formel (II)

In einen 5 l-Stahlkessel mit Rührer, Innenthermometer, Kurzwegabscheider und 30 cm-Vigreuxkolonne mit beheiztem Kolonnenkopf werden 1139,8 g (4,992 mol) Bisphenol-A, 1113,9 g (5,2 mol = 104 mol-%) Diphenylcarbonat und 0,206 g (0,01 mol-%) Tetraphenylphosphoniumtetraphenylboranat eingewogen. Die Apparatur wird durch Anlegen von Vakuum und Spülen mit Stickstoff (3 mal) vom Luftsauerstoff befreit und das Gemisch auf 150°C aufgeheizt. Bei einem Vakuum von 100 mbar und ca. 180°C wird das entstehende Phenol abdestilliert. Nun wird in ca. 1½ h das Vakuum stufenweise bis auf 10 mbar verbessert, die Temperatur auf 250°C gesteigert und ½ h gehalten (Haltephase I). Man erhält ein Oligocarbonat mit einer relativen Lösungsviskosität von ~ 1,123 und einem phenolischen OH-Gehalt von 1900 ppm.

III) **Vergleichsbeispiel 1**

In einen 5 l-Stahlkessel mit Rührer, Innenthermometer, Kurzwegabscheider und 30 cm-Vigreuxkolonne mit beheiztem Kolonnenkopf werden 1139,8 g (4,992 mol) Bisphenol-A, 1113,9 g (5,2 mol = 104 mol-%) Diphenylcarbonat, 5,4 g (5 Gew.-%) des Polysiloxans D (siehe Tabelle 1) und 0,206 g (0,01 mol-%) Tetraphenylphosphoniumtetraphenylboranat eingewogen. Die Apparatur wird durch Anlegen von Vakuum und Spülen mit Stickstoff (3 mal) vom Luftsauerstoff befreit und das Gemisch auf 150°C aufgeheizt. Bei einem Vakuum von 100 mbar und ca. 180°C wird das entstehende Phenol abdestilliert. Gleichzeitig wird die Temperatur in ca. 50 min auf 180 bis 190°C aufgeheizt, und diese in weiteren 2 Stunden langsam auf 250°C gesteigert. Nun wird das Vakuum stufenweise bis auf 1 mbar verbessert und die Tempertur auf 280°C erhöht. Zum jetzigen Zeitpunkt ist die Hauptmenge an Phenol abgespalten. Durch weiteres Erhitzen bei 280°C und 0,1 mbar über 1½ Stunden erhält man ein farbhelles, lösungsmittelfreies Polycarbonat. Die relative Lösungsviskosität beträgt 1,31 l (Dichlormethan, 25°C, 5 g/l). Der phenolische OH-Wert des Blockcopolycarbonats beträgt 100 ppm.

IV) **Beispiel 1**

In einen 5 l-Stahlkessel mit Rührer, Innenthermometer, Kurzwegabscheider und 30 cm-Vigreuxkolonne mit beheiztem Kolonnenkopf werden 1139,8 g (4,992 mol) Bisphenol-A, 1113,9 g (5,2 mol = 104 mol-%) Diphenylcarbonat und 0,206 g (0,01 mol-%) Tetraphenylphosphoniumtetraphenylboranat eingewogen. Die Apparatur wird durch Anlegen von Vakuum und Spülen mit Stickstoff (3 mal) vom Luftsauerstoff befreit und das Gemisch auf 150°C aufgeheizt. Bei einem Vakuum von 100 mbar und ca. 180°C wird das entstehende Phenol abdestilliert. Nun wird in ca. 1½ h das Vakuum stufenweise bis auf 10 mbar verbessert, die Temperatur auf 250°C gesteigert und ½ h gehalten (Haltephase I). Man erhält ein Oligocarbonat mit einer relativen Lösungsviskosität von ~ 1,123 und einem phenolischen OH-Gehalt von 1900 ppm.

Nun wird mit Stickstoff belüftet und das Vakuum auf 100 mbar eingestellt, gleichzeitig werden 64,6 g (5 Gew.-%) des Polysiloxans A zugegeben und ½ h nachgerührt (Haltephase II). In 10 bis 15 min wird das Vakuum auf 10 mbar, in weiteren 10 min auf> 1 mbar verbessert und die Temperatur auf 300°C bis 310°C erhöht. Nach ½ h wird der Kurzwegabscheider geöffnet und weitere 1½ h polykondensiert.

Man erhält ein weißes Copolycarbonat mit einer relativen Lösungsviskosität von 1,274 und einem phenolischen OH-Gehalt von 120 ppm.

**Beispiel 2**

wie Beispiel 1 nur mit einer Haltephase I von 2 Stunden.

**Beispiel 3**

wie Beispiel 1 nur mit 3 Gew.-% A.

**Beispiel 4**

wie Beispiel 1 nur mit 5 Gew.-% B.

**Beispiel 5**

wie Beispiel 1 nur mit 5 Gew.-% C.

**Beispiel 6**

wie Beispiel 1 nur mit 5 Gew.-% E und keine Haltephase I.

**Beispiel 7**

wie Beispiel 1 nur mit 5 Gew.-% E und keine Haltephasen I und II.

**Beispiel 8**

wie Beispiel 1 nur mit 5 Gew.-% G.

**Beispiel 9**

wie Beispiel 1 nur mit 5 Gew.-% H.

Tabelle 2

| Charakteristische Eigenschaften der Polycarbonate | | | | | | | |
|---|---|---|---|---|---|---|---|
| | | Oligocarbonat | | | SiCoPC | | |
| Bsp. | | $\eta_{rel}$ | phenol. OH/ ppm | Haltephase in min | $\eta_{rel}$ (Gr.)* | $\eta_{rel}$ (PK)** | phenol. OH/ppm |
| Vgl.1 | D | - | - | - | 1,311 | 1,302 | 100 |
| 1 | A | 1,123 | 1900 | 30 | 1,274 | 1,268 | 120 |
| 2 | A | 1,239 | 2300 | 120 | 1,246 | 1,241 | 700 |
| 3 | A | - | - | 30 | 1,282 | 1,264 | 140 |
| 4 | B | 1,118 | 2400 | 30 | 1,260 | 1,251 | 230 |
| 5 | C | 1,128 | 1800 | 30 | 1,276 | 1,250 | 70 |
| 6 | E | 1,128 | 2400 | 30 | 1,319 | 1,277 | 260 |
| 7 | E | 1,116 | 2200 | 0 | 1,279 | 1,259 | 100 |
| 8 | G | 1,142 | 1500 | 30 | 1,277 | 1,263 | 100 |
| 9 | H | - | - | 30 | 1,273 | 1,261 | 140 |

* Gr Granulat
* PK Probekörper

**Zugversuch**

Zur Untersuchung der mechanischen Eigenschaften der SiCoPC-Proben mittels Zugversuch entsprechend Din 53455 (ISO 527) wurden jeweils 10 Schulterstäbe Nr. 3 (4 mm Dicke) abgespritzt. Die Ergebnisse sind in Tabelle 3 zusammengestellt.

Tabelle 3

| Ergebnisse des Zugversuchs nach DIN 53455 | | | | | | |
|---|---|---|---|---|---|---|
| Nr. | $\eta_{rel}$ (PK) | Reißdehnung | Streckdehnung | Streckspannung | Reißfestigkeit | E-Modul |
| | | in % | | in N/mm$^2$ | | |
| Vgl. 1 | | 9 | 4,6 | 53 | 47 | 2100 |
| 1 | 1,260 | 93 | 5,8 | 57 | 49 | 2140 |
| 2 | 1,241 | 108 | 6 | 57 | 55 | 2330 |
| 3 | 1,264 | 101 | 6 | 60 | 57 | 2250 |
| 4 | 1,251 | 99 | 6 | 57 | 56 | 2300 |
| 5 | 1,250 | 90 | 5,8 | 57 | 90 | 2170 |
| 6 | 1,277 | 98 | 6 | 57 | 56 | 2100 |
| 7 | 1,259 | 99 | 6 | 57 | 56 | 2120 |
| 8 | 1,263 | 113 | 6 | 56 | 60 | 2070 |
| 9 | 1,261 | 110 | 5,9 | 57 | 59 | 2090 |

**Tieftemperaturschlagzähigkeit**

Zur Ermittlung des Zäh-Spröd-Übergangs wurde der Kerbschlagbiegeversuch nach IZOD am gekerbten Probekörper (ISO 180-4A) verwendet. Hierzu wurden jeweils 10 Isostäbe (63,5*12,7*3,2 mm$^3$) abgespritzt. Die Meßergebnisse sind in Tabelle 4 zusammengetragen.

Tabelle 4

| Tieftemperaturkerbschlagzähigkeit nach ISO 180-4A | | | | | | |
|---|---|---|---|---|---|---|
| Kerbschlagzähigkeit (kJ/m$^2$) nach ISO 180-4A | | | | | | |
| Nr. | RT | -20°C | -30°C | -40°C | -50°C | -60°C |
| Vgl. 1 | 56z | 46z | 5z47/5s24 | 2z40/8s22 | - | - |
| 1 | 67z | - | - | 57z | 53z | 35s |
| 2 | 61z | 54z | - | 50z | 4z54/6s31 | 2z40/8s28 |
| 3 | 71z | 63z | 58z | 4z54/6s31 | 24s | - |
| 5 | 68z | - | - | 55z | 4z55/6s40 | 26s |
| 6 | 79z | 73z | - | 69z | 63z | 35s |
| 7 | 72z | 67z | - | 63z | 7z58/3s40 | 33s |
| 8 | 73s | 65z | - | 62z | 58z | 6z54/4s32 |
| 9 | 73z | 67z | - | 65z | 6z58/4s32 | 29s |
| s = spröd; z = zäh | | | | | | |

**Patentansprüche**

**1.** Verfahren zur Herstellung von Polysiloxan-Polycarbonat-Blockcokondensaten aus phenolischen Verbindungen und Diarylcarbonaten in der Schmelze bei Temperaturen von 250°C bis 320°C und Drücken von 0,01 mbar bis 100 mbar, gegebenenfalls in Gegenwart eines Katalysators, **dadurch gekennzeichnet, daß** man als phenolische Verbindungen Hydroxyaryloxy-terminierte Dimethylsiloxane und anstelle von Diarylcarbonaten Oligocarbonate aus Diphenolen mit mittleren Molekulargewichten $M_w$ von 3000 bis 24000 und mit OH/Aryl-Endgruppenverhältnissen von 10 zu 90 bis 70 zu 30 einsetzt, wobei das Molverhältnis zwischen den Hydroxyaryloxy-terminierten Dimethylsiloxanen zu den Oligocarbonaten zwischen 1 zu 99 und 40 zu 60 liegt.

2. Polysiloxan-Polycarbonat-Blockcokondensate erhältlich nach dem Verfahren des Anspruchs 1.

3. Verwendung von Blockcokondensaten des Anspruchs 2 zur Herstellung von Kraftfahrzeug-Außenteilen und von Schaltkästen.

## Claims

1. Process for the production of polysiloxane/polycarbonate block co-condensation products from phenolic compounds and diaryl carbonates in a melt at temperatures of 250°C to 320°C and pressures of 0.01 mbar to 100 mbar, optionally in the presence of a catalyst, **characterised in that** the phenolic compounds used are hydroxyaryloxy-terminated dimethylsiloxanes and, instead of diaryl carbonates, oligocarbonates are used prepared from diphenols having average molecular weights $\overline{M}_w$ of 3000 to 24000 and having OH/aryl end group ratios of 10:90 to 70:30, wherein the molar ratio between the hydroxyaryloxy-terminated dimethylsiloxanes to the oligocarbonates is between 1:99 and 40:60.

2. Polysiloxane/polycarbonate block co-condensation products obtainable using the process of claim 1.

3. Use of block co-condensation products according to claim 2 for the production of exterior motor vehicle components and switch boxes.

## Revendications

1. Procédé de préparation de cocondensats séquencés polysiloxane-polycarbonate à partir de composés phénoliques et de carbonates de diaryle dans la masse fondue à des températures allant de 250°C à 320°C et sous des pressions allant de 0,01 mbar à 100 mbar, le cas échéant en présence d'un catalyseur, **caractérisé en ce que** l'on met en oeuvre comme composé phénolique, un diméthylsiloxane terminé par des radicaux hydroxyaryloxy et à la place du carbonate de diaryle, un oligocarbonate de diphénols avec des poids moléculaires moyens Mw allant de 3000 à 24 000 et avec des rapports de radicaux terminaux OH/aryle allant de 10:90 à 70:30, où le rapport molaire entre le diméthylsiloxane terminé par des radicaux hydroxyaryloxy et l'oligocarbonate se situe dans l'intervalle allant de 1:99 à 40:60.

2. Cocondensats séquencés polysiloxane-polycarbonate pouvant être obtenus suivant le procédé de la revendication 1.

3. Utilisation des cocondensats séquencés suivant la revendication 2, pour la préparation de parties externes de véhicules automobiles et d'armoires de commande.